# EUROPEAN PATENT APPLICATION

(11) **EP 0 835 822 A1**
(43) Date of publication of application: **15.04.1998**
(21) Application number: 97306431.4
(22) Date of filing: 22.08.1997
(51) Int. Cl.: B65D 63/10

(54) **Plastics tie**

(30) Priority: 28.08.1996 GB 9617957; 28.09.1996 GB 9620399
(71) Applicant: BOWTHORPE PLC, Crawley, West Sussex RH10 2RZ (GB)
(72) Inventor: Blanks, Steven John, Winsord, Cheshire, CW7 2TU (GB)
(74) Representative: Evans, Huw David Duncan

(57) **Abstract**

A one-piece plastics security tie for tying mail bags and the like comprises an elongate strap 30 having a first portion 30a which extends between an apertured head 31 and an abutment 33 and a second portion 30b which extends between the abutment 33 and the opposite end of the strap 30 and which is provided with a series of serrations 32 on one side thereof. A pawl 48 projects into the head aperture 45 from an end wall 42 and engages the strap serrations 32 when the second portion 30b of the strap 30 is passed through the head aperture 45. The abutment 33 is arranged to prevent the first portion 30a of the strap 30 from passing through the head aperture 45. The strap 30 can be removed from about the object to which it is tied by tearing it across a frangible region 35.

The head 31 of the tie comprises a resiliently deflectable flap 55 extending from the opposite end wall 43 of the head to the pawl 48, towards the insertion end 46 of the head aperture, at a point adjacent the outlet end 47 of the head aperture 45. The flap 55 is deflected away from the pawl 48 on the opposite end wall 42 of the head, when the strap 30 is inserted into the head aperture 45, thereby enlarging the head aperture 45, so that a lower force is required to insert the strap into the head aperture 45.

## Description

This invention relates to a one-piece tie of plastics material, particularly for security uses.

It is well known to use one-piece plastics ties for tying the necks of mail bags. Such ties comprise an elongate serrated strap having an apertured head at one end: in use the strap is passed through an identification label before it is looped around the neck of the mail bag, inserted through the head aperture and pulled tight. The serrations on the strap interlock with a pawl element in the head aperture to prevent loosening.

The tie can be released from the neck of the bag by pulling on a tab which tears the head away from the strap. The broken plastics tie can be recycled, however before this can be done the label must be removed. It will be appreciated that the label is located on a length of the strip of the used tie, which is disposed between the tab and the head. A disadvantage of this is that the label has to be torn to remove it from the strap, which is inconvenient and time consuming. A further disadvantage is that the labels cannot be used again or kept for reference once they are torn.

We have now devised a plastics tie which alleviates the above-mentioned problems.

In accordance with this invention as seen from a first aspect, there is provided a one-piece tie of plastics material comprising an elongate strap having a first portion which extends between an apertured head at one end of the strap and head abutment means on the strap, and a second portion which extends between the head abutment means and the opposite end of the strap and which is provided with a series of serrations on one side thereof, and means in the head aperture for engaging the strap serrations when the second portion of the strap is passed through the head aperture, the head abutment means being arranged to prevent said first portion of the strap from passing through the head aperture, the first portion of the strap being provided with a frangible region which can be broken to remove the tie.

In use, the second portion of the strap is threaded through an identification label and then the strap is looped around the object to be tied e.g. the neck of a mail bag. The tie is tightened until the head abutment means on the strap abuts the head and thereby prevents the tie from being tightened further. The tie is removed by breaking the frangible region of the first portion of the strap. The label is easier to remove from the strap because the strap itself breaks, with the result that the broken end of the strap can be pulled through the aperture in the label.

Preferably the frangible region of the first portion of the strap is disposed at or adjacent the point at which the first portion of the strap meets the head abutment means, so that the label (which is threaded onto the second portion of the strap) just has to be pulled over the head abutment to remove it from the broken tie.

Preferably the head abutment means is arranged to retain the label on the strap when the latter breaks, so that a broken tie can be identified, for example if it is found on the floor.

Preferably the head abutment means comprises a projection which projects outwardly from the strap, and which is of a dimension that is slightly greater than the diameter of the label aperture, so that the label can be removed from the broken tie by just pulling it over the strap projection.

Preferably a tab is provided on the first portion of the strap to help tear its frangible region.

Preferably the tab is disposed between the frangible region and the head so that it does not cause an obstruction to the removal of the label when the strap is broken.

Preferably the first portion of the strap comprises a passageway which extends the plane of the strap, and which is arranged to receive the length of the second portion of the strap which projects from the head after it has been tied.

Known security ties are generally formed from polypropylene, which is resilient and strong. However, a disadvantage of using such a material is that the pawl is very resilient, with the result that a substantial force is required to insert and pass the strap through the head.

The tolerances inside the head of a security tie are very tight and the strap has deep serrations, in order to make it difficult to release the strap by inserting a pointed implement into the head. These two security features also make the strap difficult to insert and tighten.

Thus, in accordance with this invention as seen from a second aspect, there is provided a one-piece tie of plastics material, comprising an elongate strap provided with an apertured head at one end and with a series of serrations on one side thereof, a pawl disposed in the head aperture for engaging the strap serrations when the strap is passed through the head aperture, the pawl extending from an end wall of the head, adjacent an insertion end of the head aperture, towards an outlet end of the head aperture, and a resiliently deflectable flap extending from the opposite end wall of the head, adjacent the outlet end of the head aperture, towards the insertion end of the head aperture.

In use, when the strap is inserted into the head aperture, the flap is deflected away from the pawl on the opposite end wall of the head, thereby enlarging the head aperture, so that a lower insertion force is required.

Preferably the free end of the flap is spaced apart from the end wall to which the flap is attached, so as to allow sufficient room for the flap to be deflected away from the pawl as the strap is inserted.

Preferably the pawl is connected to said end wall at a point which is disposed inwardly of said insertion end, the pawl comprising an extension which extends beyond said point towards the insertion end, said extension being provided with an abutment surface which is arranged to abut said end wall, in order to limit the angle through which the pawl pivots into the aperture when the strap is tensioned.

Preferably the pawl and flap comprise opposed faces which diverge in the direction of the insertion end of the aperture.

Preferably the distance between the tip of the pawl and the flap is less than the thickness of the strap at the roots of its serrations in the as moulded condition of the tie, so that the tip of the pawl is held in engagement with the strap. An embodiment of this invention will now be described by way of example only, and with reference to the accompanying drawings, in which:
Figure 1 is a perspective view of a conventional mail bag tie, when tied;
Figure 2 is a perspective view of the tie of Figure 1, when broken;
Figure 3 is a perspective view of a mail bag tie in accordance with this invention, when tied;
Figure 4 is a longitudinal section through the head of the tie of Figure 3;
Figures 5a and 5b are sectional views along the line V-V of Figure 4, when viewed in directions A and B respectively; and
Figure 6 is a perspective view of the tie of Figure 3, when broken.

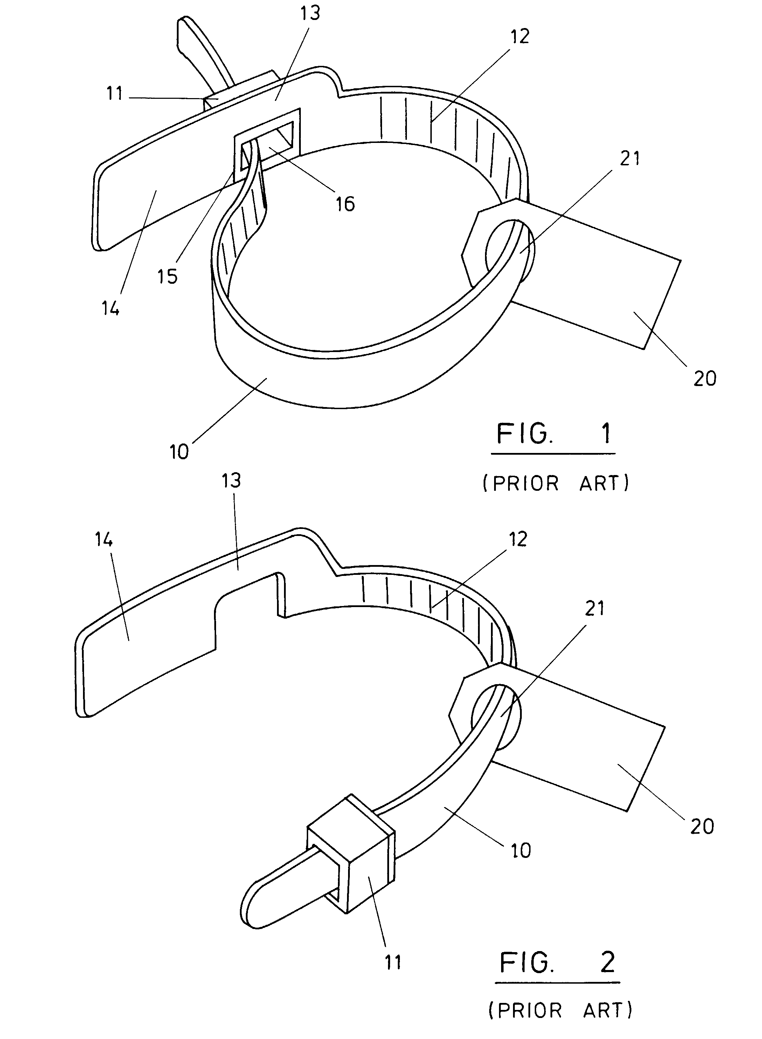

Referring to Figure 1 of the drawings, there is shown a conventional one-piece mail bag tie formed from plastics material. The tie comprises a flat elongate strap 10 provided with a series of transverse ratchet serrations 12 on one side and with a head 11 adjacent one end, the head projecting from the opposite side of the strap. The strap 10 comprises an extension 13 which extends around the side of the head 11, and which joins to a tab 14 at that end of the tie. The head 11 is connected to the rest of the tie by a frangible web 15 that extends around three sides of the head 10.

In use of the tie, the strap 10 is initially threaded through an aperture 21 in an identification label 20, the strap 10 is then formed into a loop around the neck of a mail bag and passed through an aperture 16 in the head 11. A pawl (not shown) disposed inside the head aperture 16 engages the strap serrations 12 and thereby prevents the tie from loosening.

The tie can be removed from the mail bag by grasping the tab 14 and tearing the head 10 away from the rest of the tie along the frangible web 15.

Mail service providers use a substantial number of mail bag ties, and a significant cost saving can be obtained if the plastics ties can be recycled. However, before this can be done the label 20 must be removed from each tie.

Referring to Figure 2 of the drawings, it can be seen that the label 20 is disposed on a section of the strap 10 which is disposed between the tab 14 and the separated head 11. The label 20 can only be removed from the strap by tearing it, which is undesirable because the label cannot be re-used or kept for reference.

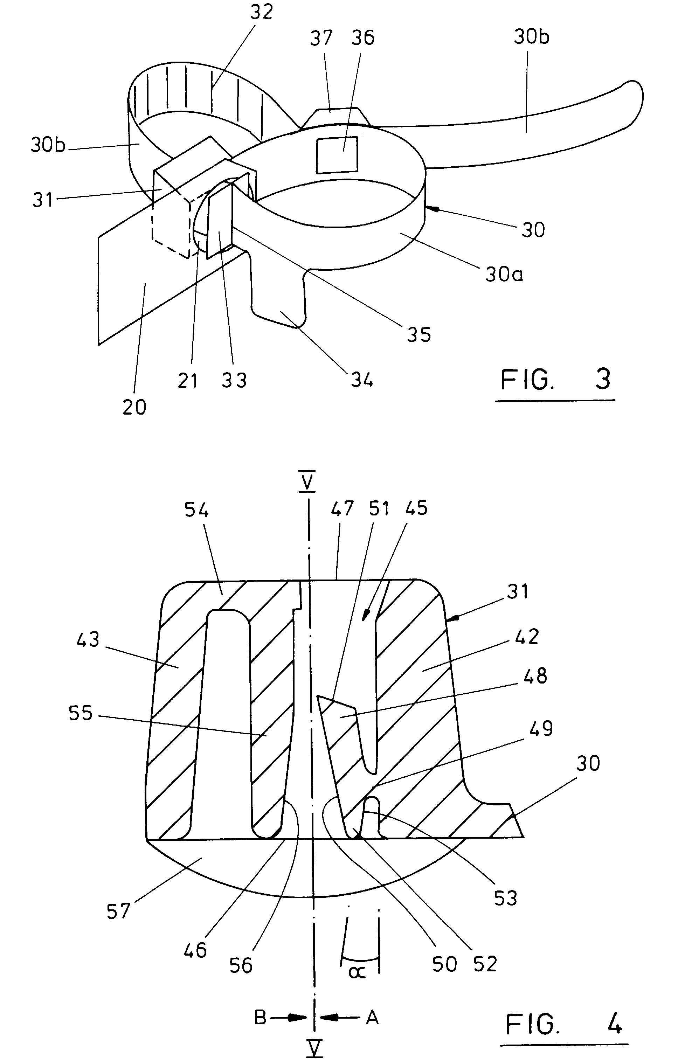

Referring to Figure 3 of the drawings, there is shown a one-piece mail bag tie in accordance with this invention moulded from plastics material. The tie comprises a flat elongate strap 30 provided with an apertured head 31 at one end thereof. The strap comprises a first portion 30a which extends between the head and an abutment 33, which is disposed intermediate the opposite ends of the strap. A second portion 30b of the strap 30 extends beyond the abutment 33 to the free end of the strap. The second portion 30b of the strap 30 is provided with a series of transverse ratchet serrations 32 on one side and only in a region adjacent the abutment 33.

The abutment comprises a pair of upstanding walls which extend from respective opposite faces of the strap 30. The first portion 30a of the strap 30 is wider than its second portion 30b, and is provided with a transverse frangible web 35 at the point where it meets the abutment 33. A tab 34 extends outwardly from one side of the strap adjacent the frangible web 35.

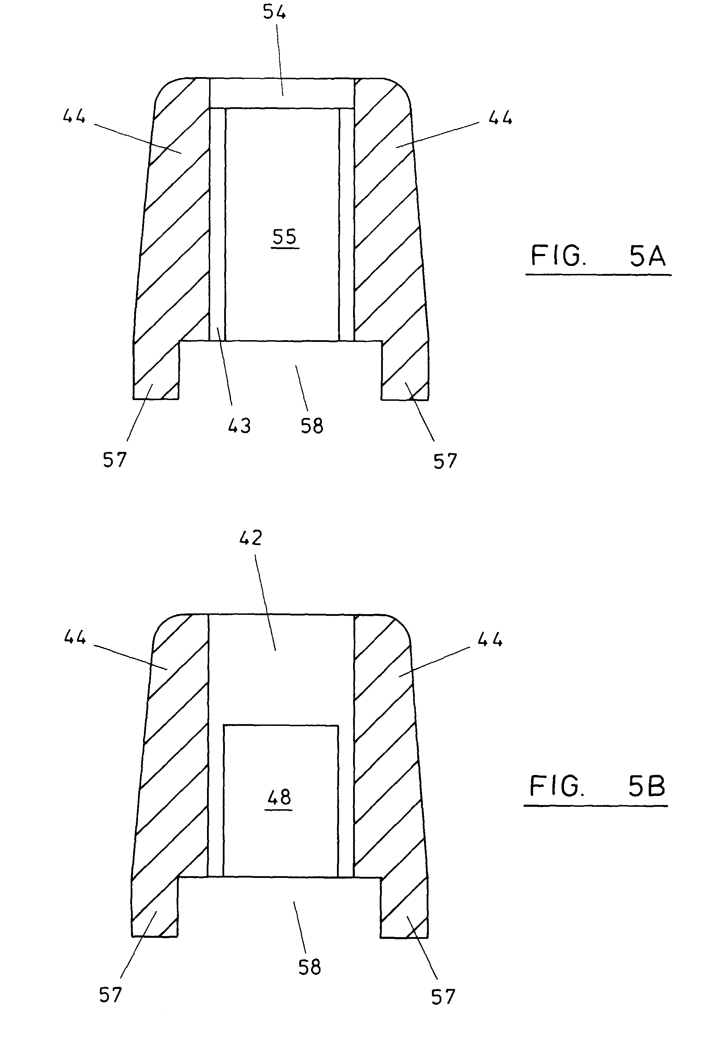

Referring to Figures 4 and 5 of the drawings, the head 31 comprises an inner end wall 42 an outer end wall 43 and a pair of opposite side walls 44. A passage 45 extends through the head from an insertion opening 46 to an outlet 47. The width of this passage 45, between the opposite side walls 44, is only slightly wider than the width of the second portion 30b of the strap 30 which is arranged to be passed through the passage 45 from the insertion opening 46 to the outlet 47.

The inner end wall 42 defines the floor of the passage 45, and a pawl 48 is joined to the floor of the passage 45 at a point which is disposed adjacent but inwardly of the insertion opening 46. The pawl 48 is joined to the floor of the passage by a flexible web 49. The pawl 48 projects towards the outlet 47 but terminates a distance from the outlet itself. The pawl 48 extends at an inclination towards the roof of the passage, and has a flat front surface 50 and a flat rearwardly inclined top surface 51. The pawl comprises a portion 52 which extends beyond the flexible web 49 towards the insertion opening 46. The rear surface 53 of the pawl extension 52 converges with the floor of the passage towards the flexible web 49, at an angle α of about 10°.

A top wall 54 of the head extends between the opposite side walls 44 at the outlet 47 of the passage 45. The top wall 54 is joined to the outer end wall 43, and extends across the head 31 to a point intermediate the inner and outer end walls 42,43.

The roof of the passage 54 comprises a resiliently flexible flap 55 which is joined to the outer edge of the top wall 54. The flap 55 extends towards the insertion opening 46, its outer surface 56 being inclined away from the pawl 48, in order to widen the passage 45 at the insertion opening 46. The opposite side walls 44 of the head 31 comprise portions 57 which extend beyond the insertion opening 46, thereby defining a channel 58 which extends axially of the strap 30 below the head 31.

In use of the tie, the second portion 30b of the strap 30 is threaded through an aperture 21 in an identification label 20, the entire strap 30 is then formed into a loop around the neck of a mail bag and its second strap portion 30b passed through the passage 45 in the head 31 from the insertion opening 46 to the outlet 47, as shown in Figure 3. As the strap 30 enters the head 41 it forces the flap 55 towards the outer end wall 43, thereby increasing the size of the restriction formed between the tip of pawl 48 and the flap 55, so that the strap 30 is easier to insert. As the strap 30 is tightened its serrations slide on the surface 50 of the pawl 48, causing the pawl to be pivoted back to allow each serration to pass. The flexible web 49 also flexes as the pawl 48 rides over the strap serrations.

The strap 30 is tightened until the abutment 33 wedges against the underside of the head 31, thereby trapping the label 20 therebetween. The first portion 30a of the strap 30 thus forms a loop around the neck of the mail bag. Once the strap 30 has been tightened, the flap 55 in the head 31 returns substantially to is as-moulded position, so that the strap 30 is held in engagement with the pawl 48. The projecting length of strap 30 is then threaded through a passageway 36 that is formed in the plane of the strap by a raised bridge formation 37. The strap 30 preferably comprises a pair of raised stops (not shown) which locate on opposite sides of the bridge formation 37, and hold the projecting strap portion in place.

The tie can be removed from the bag by grasping the tab 34 and tearing the strap 30 along the frangible web 35, so that the first portion 30a of the strap 30 separates from the abutment 33.

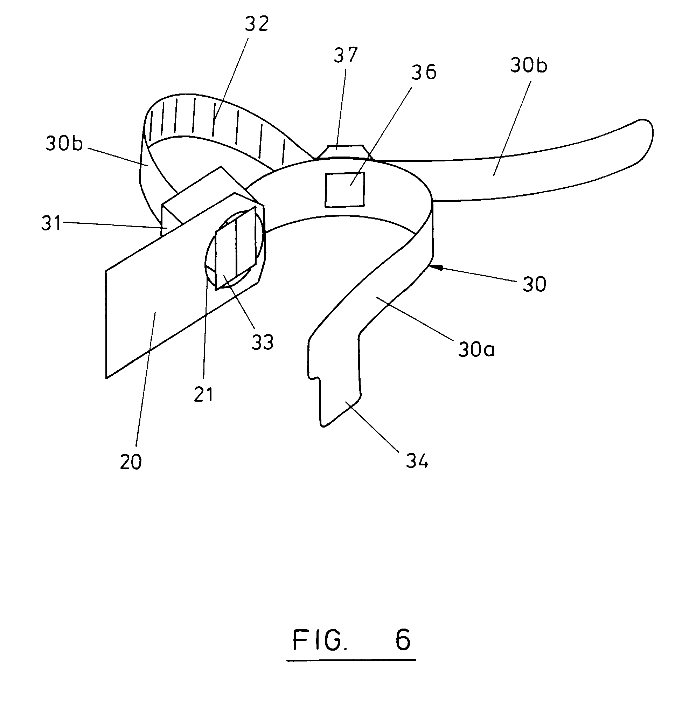

Referring to Figure 6 of the drawings, it can be seen that the label 20 remains wedged on the second strap portion 30b between the underside of the head 31 and the abutment 33. The abutment 33 is slightly greater in size than the circular aperture 21 in the label 20, and thus the label 20 is retained with the tie when the latter is removed from the neck of a mail bag. This has the advantage that the tie can be identified if it is found discarded on the floor. However, it is relatively quick and easy to separate the label 20 from the broken tie by pulling the label 20 over the abutment 33. In this manner the label 20 remains intact, so that it can be reused or stored for reference.

In an alternative embodiment the abutment may be smaller than the label aperture, so that the label immediately separates from the tie as soon as it is broken.

When the tie is tied, any pulling force that is applied to the strap 30 in the loosening direction pivots the pawl 48 counterclockwise, thereby pushing the strap 30 against the flap 55. Once the pawl 48 has pivoted through an angle a of 40°, the rear wall 53 of the pawl extension 52 abuts the floor of the passage 45, and so limits the movement of the pawl 48 to prevent it from being pivoted back on itself.

If an excessive pulling force is applied to the strap then the flap 55 will pivot allowing the strap serrations to disengage from the pawl 48. However, the frangible portion 35 of the strap 30 is preferably designed to break at a force which is lower than the force required to disengage the pawl 48 from the strap serrations. Once the strap 30 breaks, the tie cannot be reapplied to the bag, and it will thus be evident that someone has tampered with the tie.

## Claims

1. A one-piece tie of plastics material comprising an elongate strap having a first portion which extends between an apertured head at one end of the strap and head abutment means on the strap, and a second portion which extends between the head abutment means and the opposite end of the strap and which is provided with a series of serrations on one side thereof, and means in the head aperture for engaging the strap serrations when the second portion of the strap is passed through the head aperture, the head abutment means being arranged to prevent said first portion of the strap from passing through the head aperture, the first portion of the strap being provided with a frangible region which can be broken to remove the tie.

2. A one-piece tie of plastics material as claimed in claim 1, in which the frangible region of the first portion of the strap is disposed at or adjacent the point at which the first portion of the strap meets the head abutment means.

3. A one-piece tie of plastics material as claimed in claims 1 or 2, in which the head abutment means comprises a projection which projects outwardly from the strap.

4. A one-piece tie of plastics material as claimed in any preceding claim, in which a tab is provided on the first portion of the strap.

5. A one-piece tie of plastics material as claimed in claim 4, in which the tab is disposed on the first portion of the strap, between the frangible region and the head.

6. A one-piece tie of plastics material as claimed in any preceding claim, in which the first portion of the strap comprises a passageway which is arranged to receive a length of the second portion of the strap which projects from the head after it has been tied.

7. A one-piece tie of plastics material as claimed in any preceding claim, in which the means for engaging the strap serrations comprises a pawl which extends from a first end wall of the head, adjacent an insertion end of the head aperture, towards an outlet end of the head aperture, the tie further comprising a resiliently deflectable flap extending from a second end wall of the head, adjacent the outlet end of the head aperture, towards the insertion end of the head aperture, said second end wall being disposed opposite the first end wall.

8. A one-piece tie of plastics material comprising an elongate strap provided with an apertured head at one end and with a series of serrations on one side thereof, a pawl disposed in the head aperture for engaging the strap serrations when the strap is passed through the head aperture, the pawl extending from a first end wall of the head, adjacent an insertion end of the head aperture, towards an outlet end of the head aperture, and a resiliently deflectable flap extending from a second end wall of the head, adjacent the outlet end of the head aperture, towards the insertion end of the head aperture, said second end wall being disposed opposite the first end wall.

9. A one-piece tie of plastics material as claimed in claims 7 or 8, in which the free end of the flap is spaced apart from said second end wall of the head.

10. A one-piece tie of plastics material as claimed in any of claims 7 to 9, in which the pawl is connected to said first end wall of the head at a point which is disposed inwardly of said insertion end of the head aperture, the pawl comprising an extension which extends beyond said point towards the insertion end of said head aperture, said extension being provided with an abutment surface which is arranged to abut said first end wall.

11. A one-piece tie of plastics material as claimed in any of claims 7 to 10, in which the pawl and flap comprise opposed faces which diverge in the direction of the insertion end of the head aperture.

12. A one-piece tie of plastics material as claimed in any of claims 7 to 11, in which the distance between the tip of the pawl and the flap is less than the thickness of the strap at the roots of its serrations in the as moulded condition of the tie.
